# EUROPÄISCHE PATENTSCHRIFT

(11) **EP 1 419 017 B1**
(45) Veröffentlichungstag und Bekanntmachung des Hinweises auf die Patenterteilung: **05.04.2006**
(21) Anmeldenummer: 02772152.1
(22) Anmeldetag: 14.08.2002
(51) Int. Cl.: B05D 7/04, B05D 7/00

(54) **MIT LACK BESCHICHTETE FOLIEN**
FILMS COATED WITH PAINT
FILMS RECOUVERTS DE PEINTURE

(30) Priorität: 20.08.2001 DE 10140769
(43) Veröffentlichungstag der Anmeldung: 19.05.2004
(73) Patentinhaber: BASF Aktiengesellschaft, 67056 Ludwigshafen (DE)
(72) Erfinder: STEININGER, Helmut, 67551 Worms (DE); KRESS, Ria, 67063 Ludwigshafen (DE); BECK, Erich, 68526 Ladenburg (DE); KÖNIGER, Rainer, Clifton Park, NY 12065 (US)
(74) Vertreter: Fitzner, Uwe
(86) Internationale Anmeldenummer: PCT/EP2002/009104
(87) Internationale Veröffentlichungsnummer: WO 2003/018214

(56) Entgegenhaltungen:
- EP-A- 0 361 351
- DE-C- 19 709 467

## Beschreibung

Die vorliegende Erfindung betrifft Folien, die mit wenigstens zwei Lackschichten beschichtet sind, ein Verfahren zur Herstellung der Folien sowie deren Verwendung.

Bei der heute üblichen naß-chemischen Lackierung über Sprühverfahren sind farbgleiche Beschichtungen auf verschiedene Substraten wie Stahl, Aluminium und Kunststoff äußerst schwierig herzustellen. Insbesondere die Kraftfahrzeugindustrie ist daher daran interessiert, daß für diesen Bereich neue Lackierungstechnologien entwickelt werden.

Folien werden als langfristige Alternative zur konventionellen Naßlackierung diskutiert. Die Beschichtung mit Folien kann ökonomisch und ökologisch eine interessante Zukunftstechnologie als Alternative zur Naßlackierung sein. Lack von der Rolle, der eine gleichbleibende Farbqualität garantiert, ermöglicht die Umsetzung eines modularen, standortübergreifenden Produktionskonzepts mit entsprechenden Kostenersparnissen bei der Fertigung. Auch bei der Folierung von Schienenfahrzeugen ergeben sich Einsparungen: beispielsweise erfordert die Applikation mehrfarbiger Begleitstreifen für jeden Farbton die Arbeitsgänge abkleben, spritzen und trocknen über 1 bis 2 Tage. Damit verbunden sind teure Hallenstandzeiten. Durch das direkte Kaschieren farbiger Lackfolienstreifen lassen sich die Standzeiten und der Arbeitsaufwand deutlich reduzieren. Neben wirtschaftlichen Gesichtspunkten bestehen auch ökologische Anreize: keine Emissionprobleme mit Lösemittel im Lackierbetrieb und umweltfreundliche Beschichtung durch Lösemittelrecycling beim Beschichtungsprozeß.

Im Stand der Technik wurden schon verschiedene Lösungsmöglichkeiten diskutiert. So werden in der EP-A-374551 beschichtete Substrate offenbart, die zur Herstellung von Anbauteilen für Automobilkarosserien geeignet sind. Die in der EP-A-374551 beschriebenen beschichteten Substrate bestehen aus Metallblechen, die mit mindestens einer Lackschicht lackiert sind oder aus Verbundwerkstoffen, deren Oberflächenschicht aus den lackierten Metallblechen besteht. Aus der DE-4424290.9-A1 sind femer mit mehreren Schichten beschichtete Substrate bekannt. Diese werden verformt und ggf. mit Hilfe weiterer Materialien weiter verarbeitet. Auf diese Weise können Anbauteile für Fahrzeugkarosserien hergestellt werden.

Mit Beschichtungsstoffen beschichtete Folien werden ferner in der EP 0395226, EP 0361823, US 5268215, US 6063230, DE 19526478 A1 und DE 3042156 A1 beschrieben.

Als Trägerfolien kommen verschiedenste Materialien in Betracht. Aus der DE-4319519 A1, der US 49335237 und der EP 0285071 ist beispielsweise der Einsatz von Polyesterfolien bekannt.

Aus der EP 0 361 351 ist ein Verfahren bekannt, bei dem eine Folie, die auf der einen Seite mit Lack und auf der anderen Seite mit Klebstoff beschichtet ist auf ein Substrat aufgetragen werden kann und wobei beim Härten des Lackes die Folie nicht mehr erweicht und ihre Form verliert.

Zur Beschichtung der Trägerfolien werden größtenteils thermische Lacke eingesetzt. Aber auch mit UV-Strahlung härtbare Lacke sind erprobt worden. Solche sind z.B. in der DE 19535935 A1, DE 4439350-A1 beschrieben.

Für das Aufbringen der Trägerfolien sind verschiedene Haftvermittler beschrieben worden, beispielhaft sei in diesem Zusammenhang auf die DE 4319519 A1 und die US 4933237 verwiesen.

Die bisher bekannten beschichteten Folien weisen verschiedene Nachteile auf. Dies gilt insbesondere hinsichtlich der Thermoverformbarkeit und der Konstanz des Farbtons. Probleme bereitet auch der Verbund der einzelnen Lackschichten und die Haftung auf dem Substrat. Schließlich sind die Folienlacke hinsichtlich mechanischer Stabilität bisher nicht vergleichbar mit konventionellen Spritzlacken. D. h., die Anforderungen an Bruchfestigkeit, Kratzfestigkeit, Chemikalienbeständigkeit und Witterungsbeständigkeit werden bisher von den beschichteten Folien nicht erfüllt. Ebenso konnten bisher Metallikeffekte nicht in Spritzlackqualität erstellt werden.

Aufgabe der vorliegenden Erfindung ist es demgemäß, Folien beschichtet mit wenigsten zwei Lackschichten zur Verfügung zu stellen, die eine brauchbare Alternative zu den bisher üblichen Flüssiglacken bilden. Insbesondere soll die Kalt- und Thermoverformbarkeit (Tiefziehen) der Folien und die Farbtonkonstanz gewährleistet sein. Weiterhin soll eine verbesserte Haftung der einzelnen Lackschichten erreicht werden. Schließlich soll hinsichtlich der mechanischen Festigkeit, insbesondere bezüglich der Bruchfestigkeit eine Verbesserung gegenüber dem bisherigen Stand der Technik erzielt werden. Zugleich sollen die Lackschichten eine dem bisherigen Flüssiglacken vergleichbare Kratzfestigkeit, Chemikalienbeständigkeit und Witterungsbeständigkeit aufweisen. Zudem ist es Ziel der Erfindung, Metalliceffekte in einer Qualität herzustellen, die dem bisherigen Spritzlack entspricht. Schließlich ist es auch Aufgabe der Erfindung, Folien herzustellen, die ohne Rückstände wieder entfernbar sind.

Die erfindungsgemäße Lösung sind Folien, beschichtet mit wenigstens zwei Lackschichten, bei denen auf einer Trägerfolie wenigstens eine erste Lackschicht vorhanden ist, die strahlenhärtbar ist, und wenigstens eine zweite Lackschicht vorhanden ist, die zumindest teilweise ohne Strahleneinwirkung härtbar ist, und daß auf die zweite Lackschicht ein Kleber gegossen kaschiert oder transferiert wird. Die zweite Lackschicht ist daher vorzugsweise zumindest teilweise thermisch härtbar.

Die strahlenhärtbaren Lacke werden vor allen Dingen für die erste Lackschicht verwendet. Vorzugsweise werden strahlenhärtbare Klarlacke eingesetzt. Es ist aber auch möglich, die Klarlacke zu färben und/oder zu pigmentieren.

Als Klarlacke werden mit energiereicher Strahlung, wie UV-Strahlung oder Elektronenstrahlung, insbesondere UV-Strahlung, härtbare Zusammensetzungen eingesetzt. Solche Klarlacke enthalten als wesentlichen Bestandteil mindestens ein mit Strahlung härtbares oligomeres oder polymeres Bindemittel.

Die als Bindemittel eingesetzten Polymere bzw. Oligomere weisen üblicherweise ein zahlenmittleres Molekulargewicht von 500 bis 50.000, bevorzugt von 1.000 bis 5.000, auf. Bevorzugt weisen sie ein Doppelbindungsäquivalentgewicht von 300 bis 2.000, besonders bevorzugt von 400 bis 900, auf. Außerdem weisen die fertig formulierten Bindemittel bei 23 °C bevorzugt eine Viskosität von 250 bis 11.000 mPas auf. Vorzugsweise werden sie in einer Menge von 5 bis 50 Gew.-%, bevorzugt 6 bis 45 Gew.-% besonders bevorzugt 7 bis 40 Gew.-%, ganz besonders bevorzugt 8 bis 35 Gew.-% und insbesondere 9 bis 30 Gew.-%, jeweils bezogen auf den Festkörper des Klarlacks angewandt.

Beispiele geeigneter Bindemittel entstammen den Oligomer- und/oder Polymerklassen der (meth)acrylfunktionellen (Meth)Acrylcopolymeren, Polyetheracrylaten, Polyesteracrylaten, Polyestern, Epoxyacrylaten, Urethanacrylaten, Aminoacrylaten, Melaminacrylaten, Silikonacrylaten und Phosphazenacrylaten und den entsprechenden Methacrylaten, wie sie beispielsweise in dem deutschen Patent DE 197 09 467 C 1, Seite 4, Zeile 36, bis Seite 5, Zeile 61, beschrieben werden. Bevorzugt werden Bindemittel eingesetzt, die frei von aromatischen Struktureinheiten sind. Bevorzugt werden daher Urethan(meth)acrylate, Phosphazen(meth)acrylate und/oder Polyester(meth)acrylate, besonders bevorzugt Urethan(meth)acrylate, insbesondere aliphatische Urethan(meth)acrylate, eingesetzt.

Die Urethan(meth)acrylate werden erhalten durch Umsetzung eines Di- oder Polyisocyanats mit einem Kettenverlängerungsmittel aus der Gruppe der Diole/Polyole und/oder Diamine/Polyamine und/oder Dithiole/Polythiole und/oder Alkanolamine und anschließende Umsetzung der restlichen freien Isocyanatgruppen mit mindestens einem Hydroxyalkyl(meth)acrylat oder Hydroxyalkylester anderer ethylenisch ungesättigter Carbonsäuren.

Die Mengen an Kettenverlängerungsmitteln, Di- bzw. Polyisocyanaten und Hydroxyalkylestern werden dabei bevorzugt so gewählt, daß
1.) das Äquivalentverhältnis der NCO-Gruppen zu den reaktiven Gruppen des Kettenverlängerungsmittels (Hydroxyl-, Amino- bzw. Mercaptylgruppen) zwischen 4 : 1 und 1 : 2, bevorzugt zwischen 3 : 1 und 3 : 2, liegt und
2.) die OH-Gruppen der Hydroxyalkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Urethan(meth)acrylate herzustellen, indem zunächst ein Teil der Isocyanatgruppen eines Di- oder Polyisocyanates mit mindestens einem Hydroxyalkylester umgesetzt wird, und die restlichen Isocyanatgruppen anschließend mit einem Kettenverlängerungsmittel umgesetzt werden. Auch in diesem Fall werden die Mengen an Kettenverlängerungsmittel, Isocyanat und Hydroxyalkylester so gewählt, daß das Äquivalentverhältnis der NCO-Gruppen zu den reaktiven Gruppen des Kettenverlängerungsmittels zwischen 4 : 1 und 1 : 2, bevorzugt zwischen 3 : 1 und 3 : 2 liegt und das Äquivalentverhältnis der restlichen NCO-Gruppen zu den OH-Gruppen des Hydroxyalkylesters 1 : 1 beträgt. Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend kann ein weiterer Teil der Isocyanatgruppen mit dem Hydroxyalkylester und im Anschluß hieran können die restlichen Isocyanatgruppen mit einem Diamin umgesetzt werden.

Eine Flexibilisierung der Urethan(meth)acrylate ist beispielsweise dadurch möglich, daß entsprechende isocyanat-funktionelle Präpolymere bzw. Oligomere mit längerkettigen, aliphatischen Diolen und/oder Diaminen, insbesondere aliphatischen Diolen und/oder Diaminen mit mindestens 6 C-Atomen umgesetzt werden. Diese Flexibilisierungsreaktion kann dabei vor oder nach der Addition von Acryl- bzw. Methacrylsäure an die Oligomere bzw. Präpolymere durchgeführt werden. Als Beispiele für geeignete Urethan(meth)acrylate seien auch die folgenden, im Handel erhältlichen polyfunktionellen aliphatischen Urethanacrylate genannt:
- Crodamer® UVU 300 der Firma Croda Resins Ltd., Kent, Großbritanniens;
- Genomer® 4302, 4235, 4297 oder 4316 der Firma Rahn Chemie, Schweiz;
- Ebecryl® 284, 294, IRR 351, 5129 oder 1290 der Firma UCB, Drogenbos, Belgien;
- Roskydal® LS 2989 oder LS 2545 oder V94-504 der Firma Bayer AG, Deutschland;
- Viaktin® VTE 6160 der Firma Vianova, Österreich; oder
- Laromer® 8861 der Firma BASF AG sowie davon abgewandelte Versuchsprodukte.

Die hier aufgeführten Systeme sind als 100 %- Formulierungen flüssig. Der Gegensatz hierzu ist das von uns bevorzugt eingesetzte Urethanacrylat-System im 100 %-Zustand fest. Vorteilhaft für Lagerung und Transport. Aus dem festen Harz werden vor Ort gießfähige Lösungen hergestellt. Hierfür geeignete Lösungsmittel sind neben anderen THF, Aceton, MEK und MIBK.

Hydroxylgruppenhaltige Urethan(meth)acrylate sind beispielsweise aus den Patentschriften US 4,634,602 A oder US 4,424,252 A bekannt.

Ein Beispiel für ein geeignetes Polyphosphazen(meth)acrylat ist das Phosphazendimethacrylat der Firma Idemitsu, Japan.

Darüber hinaus können die Klarlacke die in dem deutschen Patent DE 197 09 467 C 1, Seite 5, Zeile 62, bis Seite 6, Zeile 30, beschriebenen Reaktivverdünner, Photoinitiatoren und Additive, wie Lichtschutzmittel, Slipadditive, Polymerisationsinhibitoren, Mattierungsmittel, Entschäumer, Verlaufsmittel und filmbildende Hilfsmittel, enthalten.

Um Bläschenbildung durch zu schnelle Lösemittelfreisetzung während des Trocknungsprozesses zu verhindem, können vorzugsweise dem Klarlack Hochsieder zugesetzt werden. Deren Anteil kann 5 % bis 60 %, vorzugsweise von 10 % bis 30 % betragen. Als Hochsieder können Dioxan, Toluol, Ethylacetat eingesetzt werden, vorzugsweise kommt Butylacetat zum Einsatz.

Die Schichtdicke der Klarlacke liegt bei 1 µm bis 400 µm, vorzugsweise 5 µm bis 100 µm, besonders bevorzugt bei 15 µm bis 60 µm. Grundsätzlich hängt die Wahl der Schichtdicke von der Verstreckung der Folie ab. Die genannten Mindestschichtdicken beziehen sich auf das Endprodukt, d. h. eine in der Regel verstreckte Folie.

Bei den zumindest teilweise ohne Strahlung härtbaren Lacken handelt es sich vorzugsweise um die farbgebenden Schichten, die zugleich die Decklackschicht bilden. Hier können auch aus dem Stand der Technik bekannte Autoreparaturlacke aufgrund ihrer guten physikalischen Trocknungseigenschaften und ihrer guten Verfügbarkeit zum Einsatz kommen.

Geeignete Reparaturlacke sind Ein- oder Mehrkomponentensysteme. Zweikomponentensysteme enthalten bekanntermaßen mindestens eine Verbindung, insbesondere ein Bindemittel, mit isocyanatreaktiven funktionellen Gruppen, wie Thiol-, Hydroxyl- und primäre und sekundäre Aminogruppen, insbesondere Hydroxylgruppen, und mindestens ein Polyisocyanat.

Beispiele für geeignete Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, »Bindemittel«, verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester-Polyurethane.

Von diesen Bindemitteln weisen die (Meth)Acrylat(co)polymerisate besondere Vorteile auf und werden deshalb besonders bevorzugt verwendet.

Herstellverfahren für (Meth)Acrylatcopolymerisate werden in der europäischen Patentanmeldung EP 0 767 185 A 1, den deutschen Patenten DE 22 14 650 B 1 oder DE 27 49 576 B 1 und den amerikanischen Patentschriften US 4,091,048 A 1, US 3,781,379 A 1, US 5,480,493 A 1, US 5,475,073 A 1 oder US 5,534,598 A 1 oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Der Anteil Bindemittel an den Reparaturlacken kann breit variieren und richtet sich nach den Erfordernissen des Einzelfalls. Vorzugsweise werden sie in einer Menge von 5 bis 90 Gew.-%, bevorzugt 6 bis 80 Gew.-% besonders bevorzugt 7 bis 70 Gew.-% ganz besonders bevorzugt 8 bis 60 Gew.-% und insbesondere 9 bis 50 Gew.-%, jeweils bezogen auf den Festkörper des Reparaturlacks, angewandt.

Die Polyisocyanate können aliphatische, cycloaliphatische oder aromatische Grundstrukturen aufweisen. Es können aber auch mindestens zwei dieser Grundstrukturen in einem Polyisocyanat vorliegen. Beispielsweise wird ein Polyisocyanat als aliphatisch angesehen, wenn seine Isocyanatgruppen ausschließlich mit aliphatischen Gruppen direkt verbunden sind. Sind die Isocyanatgruppen sowohl mit aliphatischen als auch mit cycloaliphatischen Gruppen direkt verbunden, handelt es sich um einen aliphatischcycloaliphatisches Polyisocyanat .

Bevorzugt werden aliphatische, aliphatisch-cycloaliphatische, cycloaliphatische und aromatische Polyisocyanate verwendet.

Vorzugsweise werden die aromatischen Polyisocyanate dann eingesetzt, wenn bei den erfindungsgemäßen Folien eine gewisse Vergilbungsneigung in Kauf genommen werden kann. Kommt es aber ganz entscheidend auf die Vergilbungsfreiheit an, werden vorzugsweise aliphatische, cycloaliphatische und aliphatisch-cycloaliphatische Polyisocyanaten eingesetzt.

Beispiele geeigneter Polyisocyanate sind isocyanatgruppenhaltige Polyurethanpräpolymere, die durch Reaktion von Polyolen mit einem Überschuß an aliphatischen, aliphatisch-cycloaliphatischen, cycloaliphatischen und aromatischen Diisocyanaten hergestellt werden können und bevorzugt niederviskos sind.

Beispiele geeigneter aromatischer Diisocyanate sind 2,4- oder 2,6-Toluylidendiisocyanat, 1,2-, 1,3- oder 1,4-Phenylendiisocyanat, 1,2-, 1,3-, 1,4-oder 1,4-Naphthylendiisocyanat oder Di(4-isocyanatopheny-1-yl)methan oder -propan.

Beispiele geeigneter aliphatischer, cycloaliphatischer und aliphatischcycloaliphatischer Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatoeyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4-diisocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat, Methylpentyldiisocyanat (MPDI), Nonantriisocyanat (NTI) oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentanmeldungen DE 44 14 032 A 1, GB 1220717 A 1, DE 16 18 795 A 1 oder DE 17 93 785 A 1 beschrieben wird, bevorzugt Isophorondiisocyanat, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI.

Es können auch Isocyanurat-, Biuret-, Allophanat-, Iminooxadiazindion-, Urethan-, Hamstoff-, Carbodiimid- und/oder Uretdiongruppen aufweisende Polyisocyanate (B) verwendet werden, die in üblicher und bekannter Weise aus den vorstehend beschriebenen Diisocyanaten hergestellt werden. Beispiel geeigneter Herstellungsverfahren und Polyisocyanate sind beispielsweise aus dem Patentschriften CA 2,163,591 A, US-A-4,419,513, US 4,454,317 A, EP 0 646 608 A, US 4,801,675 A, EP 0 183 976 A 1, DE 40 15 155 A 1, EP 0 303 150 A 1, EP 0 496 208 A 1, EP 0 524 500 A 1, EP 0 566 037 A 1, US 5,258,482 A 1, US 5,290,902 A 1, EP 0 649 806 A 1, DE 42 29 183 A 1oder EP 0 531 820 A 1 bekannt oder sie werden in der nicht vorveröffentlichten deutschen Patentanmeldung DE 100 05 228.2 beschrieben.

Desweiteren kommen die in der deutschen Patentanmeldung DE 196 09 617 A 1 beschriebenen Addukte von Polyisocyanaten mit isocyanatreaktiven funktionellen Gruppen enthaltenden Dioxanen, Dioxolanen und Oxazolidinen, die noch freie Isocyanatgruppen enthalten oder in Kombination mit anderen Polyisocyanaten eingesetzt werden, als Polyisocyanate in Betracht.

Der Gehalt der Beschichtungsstoffe an Polyisocyanaten kann sehr breit variieren und richtet sich nach den Erfordernissen des Einzelfalls, insbesondere nach dem Gehalt der Bestandteile an isocyanatoreaktiven Gruppen. Vorzugsweise liegt der Gehalt bei 5 bis 50 Gew.%, bevorzugt 6 bis 45 Gew.-%, besonders bevorzugt 7 bis 40 Gew.-%, ganz besonders bevorzugt 8 bis 35 Gew.-% und insbesondere 9 bis 30 Gew.-%, jeweils bezogen auf den Festkörper des erfindungsgemäßen Beschichtungsstoffs.

Darüberhinaus enthalten die Reparaturtacke Bestandteile, die sie strahlenhärtbar machen.

Beispiele geeigneter strahlenhärtbarer Bestandteile sind die vorstehend beschriebenen strahlenhärtbaren Bindemittel, wie sie in den Klarlacken verwendet werden. Die strahlenhärtbaren Bindemittel können darüber hinaus noch die vorstehend beschriebenen isocyanatreaktiven funktionellen Gruppen enthalten.

Weitere Beispiele geeigneter strahlenhärtbarer Bestandteile sind Isocyanatoacrylate, die Doppelbindungen enthaltende Gruppen und freie Isocyanatgruppen enthalten.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb ganz besonders bevorzugt verwendet.

Die Isocyanatoacrylate können hergestellt werden durch die Umsetzung der vorstehend beschriebenen Polyisocyanate mit Verbindungen, die eine isocyanatreaktive funktionelle Gruppe und mindestens eine Doppelbindungen enthaltende Gruppe aufweisen. Beispiele geeigneter Verbindungen dieser Art sind 2-Hydroxyethylacrylat, 2- und 3-Hydroxypropylacrylat, 2-, 3- und 4-Hydroxybutylacrylat, deren Umsetzungsprodukte mit epsilon-Caprolacton oder Allylalkohol. Ergänzend wird auf die europäische Patentanmeldung EP 0 928 800 A 1 verwiesen.

Darüber hinaus können die Reparaturlacke noch mindestens einen der in der deutschen Patentanmeldung DE 199 20 799, Seite 7, Zeile 6, bis Seite 8, Zeile 37, beschriebenen Zusatzstoffe enthalten.

Den Autoreparaturlacken und den Klarlacken werden bevorzugt Verlaufsmittel zugesetzt, um ein gutes Benetzungsverhalten Klarlack/Farblack zu erreichen.
Beispiele geeigneter Verlaufmittel werden in Römpp Lexikon Lacke und Druckfarben, Georg Thieme Verlag, Stuttgart, New York, 1998, »Verlauf(hilfs)mittel«, Seite 602, oder in Johan Bieleman, »Lackadditiven«, Wiley-VCH, Weinheim, New York, 1998, »6.1.2 Handelsübliche Verlaufsadditive« Seiten 177 bis 181, beschrieben. Vorzugsweise werden Fluortenside verwendet. Fluortenside sind handelsübliche Produkte und werden beispielsweise von der Firma 3 M unter der Marke Fluorad ® FC-171, -129, -170C, -430 oder -431 vertrieben.

Zu den erfindungsgemäß bevorzugt einsetzbaren pigmentierten Lacken gehören solche, die thermisch und mittels Strahlung härtbar sind (sogenannte Dual Cure Systeme). Hierbei erfolgt zunächst ein Auftrag der flüssigen Lacke. In diesem Stadium weisen diese eine niedrige Viskosität auf. Durch thermische Härtung entsteht hier eine elastomere Beschichtung, die durch anschließende Vernetzung und Strahleinwirkung weiter vernetzt werden kann.

Auf diese Weise läßt sich beispielsweise aus den vorstehend beschriebenen Isocyanatacrylaten und den hydroxylgruppenhaltigen Bindemitteln zunächst ein Polyurethannetzwerk herstellen, welches anschließend unter Einwirkung von Strahlung zu Polyurethan-Polyacrylat vernetzt wird.

Die Schichtdicken nach der Verstreckung der erfindungsgemäß eingesetzten Decklacke liegen bei 10 µm bis 60 µm, vorzugsweise 15µm bis 40 µm. Ebenso wie die Schichtdicke der Klarlacke hängt auch die Decklackschichtdicke von der gewählten Verstreckung ab.

Für die Strahlenhärtung der Klarlackschicht und der pigmentierten Schicht kommen vorzugsweise Elektronenstrahlung sowie UV-Strahlung in Frage. Die Härtung mit UV-Strahlung wird erfindungsgemäß bevorzugt.

Bei dem Einsatz der Dual Cure Systeme ist insbesondere die Kombination der Eigenschaften eines konventionellen 2-Komponenten-Systems mit einem UV-vemetzenden System von Vorteil. Durch das bei Raumtemperatur elastomere Verhalten wird eine sehr gute Tiefziehbarkeit erreicht, während nach der Strahleneinwirkung eine gute Vernetzung an der Nahtstelle zum Klarlack erzielt wird. Hierzu kommt, daß die beschriebenen Schichten in der erfindungsgemäßen Kombination von strahlenhärtbarer und zumindest teilweise strahlenhärtbarer Schicht besonders aneinander haften, vor allem, wenn die zuletzt genannte Schicht ein Dual Cure-System ist. Diese Haftung geht auch bei thermischen oder mechanischen Einflüssen nicht verloren.

Probleme bereitete bei der Entwicklung des Erfindungsgegenstandes das Auffinden geeigneter Trägerfolien. Überraschend wurde festgestellt, daß besonders gute Ergebnisse mit ungereckten Polypropylenfolien erzielt werden. Diese sind auf Beschichtungsmaschinen gut beschichtbar und nach Aushärtung des Lackverbunds von der Trägerfolie ablösbar. Die Tiefziehfähigkeit ist ausgezeichnet. Erfindungsgemäß wurde nunmehr überraschend festgestellt, daß vorzugsweise bei einer Trägerfoliendicke von 75 µm und kleiner sowohl eine gute Tiefziehfähigkeit als auch eine ausreichende thermische Stabilität erzielt wird. Erfindungsgemäß werden demgemäß Trägerfolien, die vorzugsweise < 100 µm, besonders bevorzugt mit > 40 µm Dicke aufweisen, eingesetzt. Besonders bevorzugt sind Dicken von 50 µm bis 70 µm. Ganz besonders bevorzugt sind 50 µm bis 60 µm.

Probleme mit der thermischen Stabilität der zu beschichtenden Folie können reduziert werden, indem Schleppfolien eingesetzt werden. Vorzugsweise werden hier Polyesterfolien in einer Dicke von 10 µm bis 100 µm verwendet. Besonders bevorzugt sind 18 µm bis 75 µm.

Die mit den Lacken beschichteten Trägerfolie können zur Beschichtung verschiedenster Substrate eingesetzt werden. Erfindungsgemäß bevorzugt ist hierbei, daß die farbgebende Schicht auf das Substrat aufgebracht wird. Nach vollständiger Aushärtung durch Einwirkung aktinischer Strahlung kann die außenliegende Trägerfolie abgezogen werden.

Die Verbindung zum Substrat wird mit Klebstoffen hergestellt.
Hierbei ist bevorzugt, UV-härtende Klebstoffe einzusetzen. Hierbei wird die UV-Strahlung bevorzugt zur Einstellung der Klebeeigenschaften benutzt. Klebstoffe dieser Art sind handelsübliche Produkte und werden beispielsweise von der Firma BASF-Aktiengesellschaft unter der Marke Acronal ® 258 UV vertrieben.

Sofern für aktinische Strahlung durchlässige Substrate verwendet werden, ist eine Vollvemetzung der Klebstoffe mittels Strahlung möglich.
Die Klebeeigenschaften sind hierbei vorzugsweise durch Vorvemetzung mittels aktinischer Strahlung einstellbar. Hierfür geeignete Klebstoffe werden beispielsweise in Römpp Chemie Lexikon, 9. Auflage, Band 3, Georg Thieme Verlag, Stuttgart, 1990, »Klebstoffe«, Seiten 2252 bis 2255, beschrieben. Von diesen Klebstoffe sind die strahlenhärtbaren Klebstoffe auf der Basis von (Meth)Acrylaten oder UP-Harzen (vgl. Römpp Lexikon Lacke und Druckfarben, Georg Thieme Verlag, Stuttgart, New York, 1998, »Ungesättigte PolyesterHarze«, Seiten 591 und 592, oder D. Stoye und W. Freitag (Editors), Paint, Coatings and Solvents, Wiley-VCH, Weinheim, New York, 2nd competely revised edition, 1998, »2.8. Unsaturated Polyester Coatings, 2.8.1. Unsaturated Polyester Binders«, Seiten 57 bis 58) und Styrol und/oder (Meth)Acrylaten von Vorteil und werden daher bevorzugt verwendet. Außerdem können die strahlenhärtbaren Klebstoffe die vorstehend beschriebenen strahlenhärtbaren Bestandteile enthalten.

UV-Systeme setzen beidseitig beschichtete Armierungsfolien voraus. Konventionelle Haftkleber können direkt auf die Decklackschicht appliziert werden.
Die Dicke der Kleber liegen vorzugsweise zwischen 4 µm und 20 µm.

Vorzugsweise wird die Armierungsfolie auf den auf der pigmentierten Lackschicht vorhandenen Klebstoff aufgetragen.

Die äußere Seite der Armierungsfolie wird vorzugsweise wiederum mit einem Klebstoff versehen. Bis zur Verarbeitung kann dieser Klebstoff mit einer entfembaren Releasefolie abgedeckt werden.

Mit den bisher bekannten Klebstoffen bereitet die Wiederentfemung der Lackfolien Probleme. Je nach Hersteller wird nämlich verlangt, daß die beschichteten Folien noch nach vier Jahren rückstandsfrei wieder vom Substrat entfembar sind.

Die vollständige Wiederentfembarkeit kann erfindungsgemäß überraschend durch die zusätzliche Armierungsfolie erreicht werden. Erfindungsgemäß weist diese vorzugsweise eine Dicke zwischen 20 µm und 50 µm auf. Besonders bevorzugt sind 20 µm bis 30 µm. Als Material wird Polypropylen bevorzugt.

Auf die zweite Lackschicht wird ein Kleber aufgebracht. Dieser wird aufgegossen, kaschiert oder transferiert. Hierauf kann eine weitere Folie mit einer bevorzugten Dicke von ≤ 100 µm, bevorzugt ≤ 500 µm aufgebracht sein.

Die Lackfolie ist kaltverformbar (tiefziehfähig) und kann damit auf jede strukturierte Fläche bei Raumtemperatur oder ggf. zur Arbeitserleichterung unter Schwacher Erwärmung aufgezogen werden. Die Thermoverformbarkeit der erfindungsgemäß beschichteten Folien wird erreicht, wenn auf die auf der pigmentierten Lackschicht vorhandene Klebstoffschicht eine weitere Folie laminiert wird. Hierbei handelt es sich regelmäßig um dickere Folien. Erfindungsgemäß bevorzugt sind Folien von 300 µm bis 1000 µm. Besonders bevorzugt werden 400 µm bis 700 µm. Hierfür kommen insbesondere in Betracht ASA, ABS, ASA-PC.

Aus dem Verbund lassen sich durch Thermoformung stabile 3D-Strukturen herstellen. Voraussetzung hierfür ist eine effektive Trocknung des Laminats. Die Oberflächeneigenschaften Glanz-, Metallic- und Floppeffekte werden durch die Verformung nicht beeinflußt.

Die vorliegende Erfindung betrifft auch ein Verfahren zur Herstellung der genannten beschichteten Folien. Hierbei können die einzelnen Lackschichten entweder hintereinander oder bevorzugt mittels annähernde Simultanbeschichtung aufgetragen werden. Bei letzterem Verfahren werden die Schichten in kurzen zeitlichen Abständen direkt naß in naß aufgetragen. Anschließend wird das System in einem Trockenkanal thermisch getrocknet. Hierdurch soll insbesondere die Entfernung des Lösungsmittels erreicht werden.

Die erfindungsgemäß hergestellten beschichteten Folien können überall dort eingesetzt werden, wo eine Lackierung von Substraten erforderlich ist. Insbesondere können Substrate aus Stahl, Aluminium und Kunststoff beschichtet werden. Ein bevorzugter Anwendungsbereich ist die Kraftfahrzeugindustrie. Aber auch für Schienenfahrzeuge, d. h. Loks und Bahnwaggons ist das erfindungsgemäße System gut einsetzbar. Der Einsatzbereich umfaßt Begleitstreifen bis Vollackierungen. Von besonderem Vorteil ist hierbei die Möglichkeit, die Lackfolien wieder zu entfernen. Denn auf diese Art lassen sich besonders leicht neue Teillackierungen der Fahrzeuge herstellen. Zugleich auch die Wiederentfernbarkeit von Vorteil bei Fällen von Vandalismus, z.B. durch Beschmieren oder Besprühen mit Farbe (Graffiti). Weiterhin kann durch die Trägerfolie ein Schutz der Lackflächen gewährleistet werden, bis das Endprodukt hergestellt ist. So können fertige Karosserieteile z.B. zunächst hinterspritzt oder hinterschäumt werden und erst nach Abschluß dieses Prozesses die Trägerfolie entfernt werden.

Im folgenden wird die Erfindung unter Bezugnahme auf die Figuren näher beschrieben.

Figur 1 zeigt einen Schichtaufbau aus Trägerfolie, Klarlack und Farblack sowie einen Kleber.

Figur 2 zeigt einen Aufbau einer erfindungsgemäß beschichteten Folie mit Armierungsfolie.

Figur 3 zeigt einen Aufbau einer erfindungsgemäß beschichteten Folie mit besonders guten Thermoformungseigenschaften.

In Figur 4 ist ein Auftragsverfahren für die Herstellung der erfindungsgemäß beschichteten Folien dargestellt.

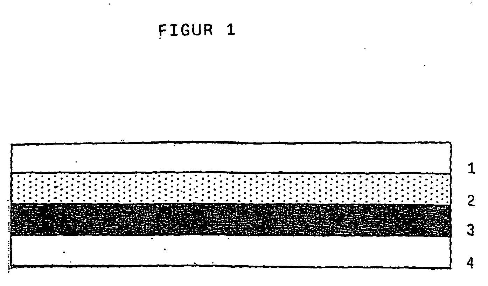

Die in Figur 1 dargestellte beschichtete Folie 1 besteht aus einer Polypropylenträgerfolie von 50 µm Dicke, einem Klarlack 2 von 40 µm Dicke und einem Farblack 3 von 30 µm Dicke sowie einen Klebstoff 4 von 20 µm Dicke. Versuche haben ergeben, daß die Tiefziehfähigkeit dieser beschichteten Folien ausgezeichnet ist. Zugleich ist die thermische Stabilität für die Herstellung ausreichend gut. Bei einem Trocknergradienten von 30 °C/60 °C/105 °C ergibt sich ein gutes Lauf- und Wickelverhalten in der Beschichtungsmaschine.

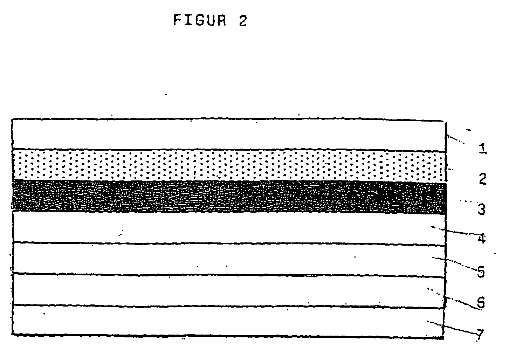

Der in Figur 2 wiedergegebene Aufbau zeigt eine Polypropylenträgerfolie 1 µm von 50 µm Dicke. Ferner eine UV-Klarlackschicht 2 von 40 µm Dicke, einen Farblack 3 von 30 µm Dicke und einen Klebstoff 4 von 20 µm Dicke. Auf diesem Klebstoff 4 ist eine Armierungsfolie 5 von 25 µm bis 50 µm kaschiert. Mittels eines weiteren Klebstoffs 6 von 20 µm Dicke wird sodann eine entfembare Releasefolie 7 laminiert.

Als Klebstoff 4 und 6 wurde UV-Arcronalkleber (Acronal 248 UV, BASF) verwendet. Versuche haben ergeben, daß die beschichteten Folien bei Temperaturen zwischen -30°C und + 90°C auf Substraten wie Stahl, Aluminium, Kunststoff und grundierten Blechen gut haften. Die beschichteten Folien waren wiederentfernbar, ohne daß beim Abziehen Risse im Lacksystem entstanden. Rückstände auf dem Substrat waren nicht mehr vorhanden.

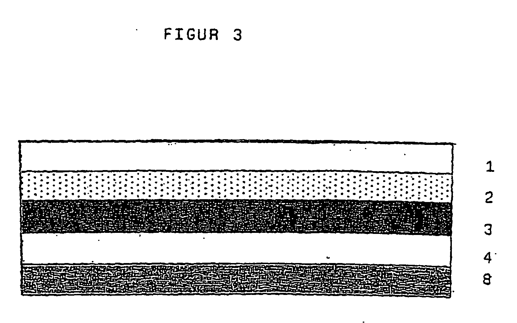

Der in Figur 3 dargestellt Aufbau zeigt eine Polypropylenfolie 1 von 50 µm Dicke, einen UV-Klarlack 2 von 40 µm Dicke, eine Farbschicht 3 von 30 µm Dicke, einen Klebstoff 4 sowie eine Folie 8 von 500 µm Dicke. Hierfür wurde erfindungsgemäß Luran S eingesetzt.

Mit dieser beschichteten Folie wurden Thermoformversuche durchgeführt. Nach sehr guter Trocknung des Verbunds war das System unter Erhalt der Oberflächeneigenschaft gut verformbar. Glanz-, Metallic- und Farbfloppeffekte veränderten sich durch die Verformung nicht. Formteile können erfindungsgemäß hinterspritzt oder hinterschäumt werden. Hierbei wird die Schutzfolie vorzugsweise erst nach der Verformung und Strahtungsvernetzungabgezogen. Der Vorteil der vorliegenden Erfindung liegt mithin darin, daß durch die Schutzfolie ein Kratzschutz der Oberfläche während des Transports und der Verarbeitung besteht. Die Schutzfolie hat außerdem den Vorteil, daß keine Sauerstoffinhibierung bei der UV-Vernetzung auftritt.

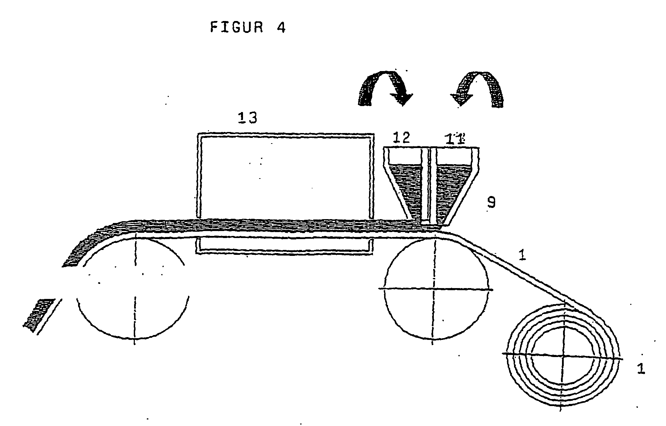

In Figur 4 wird die Herstellung der erfindungsgemäß beschichteten Folien beispielhaft dargestellt. Die auf der Rolle angelieferte Trägerfolie 1 wird unter ein vordosiertes Gießsystem 9 geführt. Dieses enthält in dem Beispiel gemäß Figur 4 die Abteilungen 11 und 12. Über die Abteilung 11 wird der Klarlack 2 über die der Abteilung 12 der Farblack 3 zugeführt. Zunächst gelangt der Klarlack 2 auf die Folie 1 und über die Abteilung 12 wird der Farblack 3 quasi simulatan naß in naßaufgetragen. Folie und Lackchichten werden anschließend durch einen Trockner 13 geführt. Die bei einem Naßschichtauftrag ab 30 µm beobachtete Bläßchenbildung durch zu rasche Lösemittelfreisetzung im Trockner entsteht, konnte durch eine Temperaturanpassung im Trockenkanal und durch Zusatz von 10 % Butylacetat (Hochsieder) zur acetonischen Klariacklösung behoben werden.

Alternativ kann das Gießsystem auch aus zwei hintereinandergeschalteten, aber räumlich getrennten Gießköpfen bestehen. Über den ersten Gießer wird die Klarlackschicht auf die Folie aufgetragen. Direkt im Naß- in-naßVerfahren wird unter dem zweiten Gießkopf die Decklackschicht aufgebracht. Für das Aufbringen der Klarlackschicht werden KRRC-Verfahren oder vorzugsweise vordosierte Gießer oder sogenannte Messergießer verwendet. Für das Aufbringen der Decklackschicht vordosierte Gießer oder bevorzugt Extrusionsgießer über einer Ausstreichlippe zur Glättung der Beschichtung.

Unabhängig davon ob ein Gießsystem gemäß Ziffer 9 der Figur 4 oder ein System mit getrennten Gießeinheiten verwendet wird, muß sichergestellt sein, daß keine Durchmischung der Grenzschichten stattfindet. Insoweit garantieren die beiden beschriebenen Gießverfahren beim naß-in-naß Auftrag die Vermeidung der Vermischung der Klarlackschicht und der Decklackschicht.

Nach dem Trockner wird die beschichtete Folie der weiteren Verarbeitung zugeführt.

## Patentansprüche

1. Folien beschichtet mit wenigstens zwei Lackschichten **dadurch gekennzeichnet, daß** auf einer Trägerfolie (1) wenigstens eine Lackschicht (2) vorhanden ist, die strahlenhärtbar ist, und wenigstens eine zweite Lackschicht (3) vorhanden ist, die zumindest teilweise ohne Strahlung härtbar ist, und daß auf die zweite Lackschicht (3) ein Kleber (4) gegossen, kaschiert oder transferiert wurde.

2. Folie nach Anspruch 1 **dadurch gekennzeichnet, daß** die zweite Lackschicht (3) thermisch und durch Strahlung härtbar ist.

3. Folien nach einem der Ansprüche 1 oder 2 **dadurch gekennzeichnet, daß** die strahlenhärtbare Schicht (2) eine unpigmentierte Klarlackschicht ist.

4. Folie nach einem der Ansprüche 1 bis 3 **dadurch gekennzeichnet, daß** die zweite Lackschicht (3) eine pigmentierte Decklackschicht ist.

5. Folie nach einem der Ansprüche 1 bis 4 **dadurch gekennzeichnet, daß** die Lackschichten (2) und (3) mittels UV-Strahlung härtbar sind.

6. Folie nach einem der Ansprüche 1 bis 5 **dadurch gekennzeichnet, daß** die strahlenhärtbare Lackschicht (2) eine Dicke von 1 µm - 400 µm, und die zweite Lackschicht (3) eine Dicke von 10 µm bis 60 µm aufweist.

7. Folie nach einem der Ansprüche 1 bis 6 **dadurch gekennzeichnet, daß** die Klebeeigenschaften durch Vorvemetzung mit aktinischer Strahlung einstellbar sind.

8. Folie nach Anspruch 7 **dadurch gekennzeichnet, daß** der Kleber (4) mittels UV-Strahlung härtbar ist.

9. Folie nach einem der Ansprüche 6 bis 8 **dadurch gekennzeichnet, daß** die Dicke des Klebers (4) 4 µm - 20 µm beträgt.

10. Folie nach einem der Ansprüche 1 bis 9 **dadurch gekennzeichnet, daß** die Trägerfolie (1) tiefziehfähig und thermisch stabil ist.

11. Folien nach Anspruch 10 **dadurch gekennzeichnet, daß** die Trägerfolien (1) aus Polypropylen besteht.

12. Folie nach einem der Ansprüche 10 oder 11 **dadurch gekennzeichnet, daß** die Trägerfolien (1) eine Dicke von 40 µm bis 100 µm aufweist.

13. Folien nach Anspruch 10 bis 12 **dadurch gekennzeichnet, daß** die Trägerfolien eine Dicke von 50 µm bis 70 µm aufweisen.

14. Folie nach einem der Ansprüche 1 bis 13 **dadurch gekennzeichnet, daß** auf die Kleberschicht (4) weitere Folien (5), (7) und (8) aufgebracht sind.

15. Folie nach Anspruch 14 **dadurch gekennzeichnet, daß** auf dem Kleber eine Armierungsfolie (5) mit einer Dicke von 25 µm bis 50 µm aufgebracht ist.

16. Folie nach Anspruch 14 **dadurch gekennzeichnet, daß** zur Herstellung eines thermoverformbaren Verbundes eine Folie (8) mit einer Dicke von ≤ 1000 µm auf den Kleber aufgebracht wird.

17. Verfahren zur Herstellung der Folie nach einem der Ansprüche 1 bis 16 **dadurch gekennzeichnet, daß** die Lackschichten (2) und (3) über annähernde Simultanbeschichtung im naß-in-naß Auftragsverfahren auf die Trägerfolie (1) aufgebracht werden und anschließend durch thermische Trocknung dem System Lösungsmittel entzogen wird.

18. Verfahren nach Anspruch 17 **dadurch gekennzeichnet, daß** auf die zweite Lackschicht eine kleberbeschichtete Releasefolie laminiert oder transferiert wird.

19. Verwendung der Folie nach einem der Ansprüche 1 bis 15 zur Beschichtung von Substraten aus Stahl, Aluminium und Kunststoff.

## Revendications

1. Feuilles enduites d'au moins deux couches de vernis, **caractérisées en ce que**, sur une feuille de support (1), il y a au moins une couche de vernis (2), qui est durcissable par rayonnement, et au moins une deuxième couche de vernis (3) qui est durcissable au moins partiellement sans rayonnement et **en ce qu'**une colle (4) a été répandue, pelliculée ou transférée sur la deuxième couche de vernis (3).

2. Feuille suivant la revendication 1, **caractérisée en ce que** la deuxième couche de vernis (3) est durcissable par voie thermique et par rayonnement.

3. Feuilles suivant l'une des revendications 1 et 2, **caractérisées en ce que** la couche durcissable par rayonnement (2) est une couche de vernis transparent non pigmentée.

4. Feuille suivant l'une des revendications 1 à 3, **caractérisée en ce que** la deuxième couche de vernis (3) est une couche de vernis de finition pigmentée.

5. Feuille suivant l'une des revendications 1 à 4, **caractérisée en ce que** les couches de vernis (2) et (3) sont durcissables au moyen d'un rayonnement UV.

6. Feuille suivant l'une des revendications 1 à 5, **caractérisée en ce que** la couche de vernis (2) durcissable par rayonnement présente une épaisseur de 1 µm à 400 µm et la deuxième couche de vernis (3) une épaisseur de 10 µm à 60 µm.

7. Feuille suivant l'une des revendications 1 à 6, **caractérisée en ce que** les propriétés adhésives peuvent être ajustées par préréticulation à l'aide d'un rayonnement actinique.

8. Feuille suivant la revendication 7, **caractérisée en ce que** la colle (4) est durcissable au moyen d'un rayonnement UV.

9. Feuille suivant l'une des revendications 6 à 8, **caractérisée en ce que** l'épaisseur de la colle (4) est de 4 µm à 20 µm.

10. Feuille suivant l'une des revendications 1 à 9, **caractérisée en ce que** la feuille de support (1) est emboutissable et thermiquement stable.

11. Feuilles suivant la revendication 10, **caractérisées en ce que** les feuilles de support (1) sont constituées de polypropylène.

12. Feuille suivant l'une des revendications 10 et 11, **caractérisée en ce que** la feuille de support (1) présente une épaisseur de 40 µm à 100 µm.

13. Feuilles suivant les revendications 10 à 12, **caractérisées en ce que** les feuilles de support présentent une épaisseur de 50 µm à 70 µm.

14. Feuille suivant l'une des revendications 1 à 13, **caractérisée en ce que** des feuilles additionnelles (5), (7) et (8) sont appliquées sur la couche de colle (4).

15. Feuille suivant la revendication 14, **caractérisée en ce qu'**une feuille d'armature (5) ayant une épaisseur de 25 µm à 50 µm est appliquée sur la colle.

16. Feuille suivant la revendication 14, **caractérisée en ce qu'**une feuille (8) ayant une épaisseur de ≤ 1 000 µm est appliquée sur la colle pour la préparation d'un composite thermoformable.

17. Procédé de préparation de la feuille suivant l'une des revendications 1 à 16, **caractérisé en ce que** les couches de vernis (2) et (3) sont appliquées sur la feuille de support (1) par une enduction approximativement simultanée dans un procédé d'application mouillé-sur-mouillé et **en ce qu'**ensuite on soutire du solvant du système par un séchage thermique.

18. Procédé suivant la revendication 17, **caractérisé en ce qu'**une feuille antiadhésive enduite de colle est laminée ou transférée sur la deuxième couche de vernis.

19. Utilisation de la feuille suivant l'une des revendications 1 à 15, pour le revêtement de substrats en acier, aluminium et matière synthétique.

## Claims

1. A film coated with at least two paint layers, wherein a carrier film (1) bears at least one paint layer (2), which is radiation-curable, and at least one second paint layer (3), which is curable at least partly without radiation, and wherein an adhesive (4) has been cast, laminated or transferred onto the second paint layer (3).

2. The film according to claim 1, wherein the second paint layer (3) is curable thermally and by radiation.

3. The film according to either of claims 1 or 2, wherein the radiation-curable layer (2) is an unpigmented clearcoat layer.

4. The film according to any one of claims 1 to 3, wherein the second paint layer (3) is a pigmented topcoat layer.

5. The film according to any one of claims 1 to 4, wherein the paint layers (2) and (3) are curable by means of UV radiation.

6. The film according to any one of claims 1 to 5, wherein the radiation-curable paint layer (2) has a thickness of 1 µm-400 µm and the second paint layer (3) has a thickness of from 10 µm to 60 µm.

7. The film according to any one of claims 1 to 6, wherein the adhesive properties are adjustable by preliminary crosslinking with actinic radiation.

8. The film according to claim 7, wherein the adhesive (4) is curable by means of UV radiation.

9. The film according to any one of claims 6 to 8, wherein the thickness of the adhesive (4) is 4 µm-20 µm.

10. The film according to any one of claims 1 to 9, wherein the carrier film (1) is formable and thermally stable.

11. The film according to claim 10, wherein the carrier film (1) is composed of polypropylene.

12. The film according to either of claims 10 and 11, wherein the carrier film (1) has a thickness of from 40 µm to 100 µm.

13. The film according to claim 10 to 12, wherein the carrier film has a thickness of from 50 µm to 70 µm.

14. The film according to any one of claims 1 to 13, wherein further films (5), (7), and (8) have been applied to the adhesive layer (4).

15. The film according to claim 14, wherein a reinforcing sheet (5) having a thickness of from 25 µm to 50 µm has been applied to the adhesive.

16. The film according to claim 14, wherein to produce a thermoformable assembly a film (8) with a thickness of ≤ 1 000 µm is applied to the adhesive.

17. A process for producing the film according to any one of claims 1 to 16, wherein the paint layers (2) and (3) are applied to the carrier film (1) by approximate simultaneous coating in a wet-on-wet application process and subsequently the solvent is removed from this system by thermal drying.

18. The process according to claim 17, wherein an adhesive-coated release film is laminated or transferred onto the second paint layer.

19. The use of the film according to any one of claims 1 to 15 for coating substrates of steel, aluminum, and plastic.
